# FASCICULE DE BREVET EUROPEEN

(11) **EP 0 524 843 B1**
(45) Date de publication et mention de la délivrance du brevet: **25.01.1995**
(21) Numéro de dépôt: 92401739.5
(22) Date de dépôt: 22.06.1992
(51) Int. Cl.: F16F 1/38

(54) **Articulation élastique à pouvoir de filtrage élevé et jeu axial contrôlé par butées incorporées et ses applications**
Elastisches Gelenk mit hohem Dämpfungsvermögen und durch eingebaute Anschläge begrenztem Axialspiel und dessen Anwendungen
Flexible bearing with high damping characteristic and end play limited by incorporated stops and its applications

(30) Priorité: 22.07.1991 FR 9109328
(43) Date de publication de la demande: 27.01.1993
(73) Titulaire: CAOUTCHOUC MANUFACTURE ET PLASTIQUES, F-78000 Versailles (FR)
(72) Inventeur: Gautheron, Michel, F-58000 Nevers (FR); Duchene, Thierry, F-91370 Verriere le Buisson (FR)
(74) Mandataire: Peuscet, Jacques

(56) Documents cités:
- EP-A- 0 163 980
- GB-A- 653 982
- US-A- 1 983 796

## Description

L'invention concerne le domaine des articulations élastiques faisant appel à une liaison élastomérique entre deux éléments rigides coaxiaux, permettant leur rotation relative sans friction autour d'un axe sur lequel des charges radiales et des efforts axiaux notables peuvent être exercés, tout en assurant des rigidités de filtrage contrôlées, par une pièce de fabrication simple. Elle s'applique tout particulièrement à l'articulation de bras de suspension pour véhicules comme à la suspension antivibratoire de matériel fragile, embarqué ou à poste fixe.

L'articulation par rotation d'un bras, par exemple de suspension, sur une chape fixée au chassis du véhicule, fait appel de façon courante à la déformation d'un bloc élastique à base d'élastomère.

Les perfectionnements d'articulations élastiques classiques, décrites dans les documents GB 637.901 de SILENTBLOC, FR 957.174 et FR 1.415.871 de METALASTIK, devenues insuffisamment performantes par rapport aux besoins actuels de l'industrie, en particulier automobile, portent d'abord sur l'amélioration des possibilités de débattement angulaire, sans jeu, en introduisant une possibilité de glissement au delà d'une certaine limite de friction. Ainsi, les documents FR 2.430.538 de SAGA pour un palier à rotule et EP 0.163.980, (équivalent à US 4.671.694) de BOGE et TRW-EHRENREICH pour un manchon quasi cylindrique, montrent l'usage d'une précontrainte axiale de la partie élastique par déformation conique des extrémités, rabattues vers l'intérieur, de la bague tubulaire extérieure. Du fait de cette précontrainte, le débattement angulaire doit dépasser un certain seuil pour utiliser le glissement fonctionnel de l'articulation. D'autre part, les deux documents présentent des articulations où un effort axial important peut être exercé, sans possibilité de jeu, mais toujours avec une rigidité élevée de la liaison qui ne peut alors pas prétendre à un bon filtrage antivibratoire.

Par contre, le document FR 827.020 de METALASTIK fait apparaître la possibilité de jeu axial à bon filtrage, par intervention d'une couche de caoutchouc, disposée par dessus l'armature externe, servant de butée pour assurer la réaction aux forces axiales, après la fermeture d'une fente, ne permettant pas, de ce fait, la simultanéité du filtrage et des efforts axiaux.

Pour le filtrage radial, des perfectionnements allant dans une autre direction améliorent le filtrage, par abaissement de la rigidité radiale sur une faible course limitée par l'entrée en fonction d'une butée, à une position la plus proche possible de la position fonctionnelle.

Le document EP 0.162.745 de HUTCHINSON montre l'utilisation de gorges ménagées dans la surface libre latérale de la matière élastique, gorges qui se ferment pour assurer la fonction butée par contact mécanique de leurs parois et permettre d'exercer des efforts radiaux importants au delà de la zone de filtrage assuré par la faible course. Les efforts axiaux ne peuvent pas particulièrement s'appliquer à ce type de pièce et, par ailleurs, l'orientation "en conique", c'est à dire une différence angulaire entre les éléments coaxiaux, modifie, en la restreignant, la valeur du jeu fonctionnel, jusqu'à l'annuler au delà d'un certain angle.
Une amélioration à ce dispositif est apportée par le document FR 2.650.040 de CAOUTCHOUC MANUFACTURE ET PLASTIQUES, demanderesse de la présente, qui décrit une articulation élastique à grand filtrage radial et limitation progressive de course, par contact sur une grande surface d'alvéole, ménagée dans un logement cylindrique, tout en maintenant une précontrainte axiale entre des rondelles coniques adhérisées. Le facteur de forme élevé, favorable du fait de l'adhérisation desdites rondelles, permet de faire intervenir une quantité notable de matériau résilient, donc restant bien filtrant, tout en conservant une possibilité d'efforts importants dans la direction axiale.

Cette disposition conserve des possibilités de débattement angulaire dit "conique" entre les axes des composants. Mais ces deux dernières applications, fort différentes, n'ont pas pour objectif premier un bon filtrage axial compatible avec des efforts axiaux occasionnels mais importants.

Il apparaît à l'évidence qu'un besoin de filtrage axial, conservant des possibilités d'efforts axiaux importants, n'est satisfait, dans les dispositifs connus de l'art antérieur que par la séparation des fonctions, obligeant l'installateur à régler séparément un filtrage efficace et la limitation de course par des butées appropriées.

L'objectif de l'invention est d'apporter un remède simple et économique, intégrant ces fonctions dans une seule articulation élastique, fabriquée par les moyens usuels de l'industrie de transformation du caoutchouc, sans que ce soit au détriment des performances demandées par l'utilisateur.

L'invention est donc une articulation élastique à pouvoir de filtrage élevé et jeu contrôlé par butées incorporées, faisant appel à la liaison élastique d'une composition élastomérique, intimement liée à deux éléments rigides coaxiaux, pour assurer la rotation sans friction d'un bras de suspension autour d'un axe fixe.

L'invention est caractérisée en ce qu'une couche d'épaisseur notable, en composition élastomérique, revêtant les épaulements à effet axial de chaque extrémité d'une douille d'armature interne, vient buter axialement, dans chaque sens, sur le bord rétreint d'une bague extérieure d'emmanchement qui tourillonne, par déformation d'une bague élastique, sur ladite douille d'armature interne, en ce que la fonction de butée, dans chaque sens axial, est optimisée de façon à disposer, lors de débattements dynamiques sans contraintes axiales permanentes, d'une rigidité de filtrage de deux à cinq fois plus basse que la rigidité s'opposant aux efforts radiaux, et en ce que la rigidité axiale devient progressivement, au delà de la zone de filtrage, supérieure à la valeur de ladite rigidité s'opposant aux efforts radiaux.

L'invention sera mieux comprise à la lecture de la description accompagnant les dessins, dans lesquels :
- la figure 1 est une coupe axiale de l'articulation élastique, de révolution, selon l'invention ;
- la figure 2 est formée de graphiques définissant la rigidité axiale, en construction schématique pour les vues 2a et 2b, en observation dynamique pour la vue 2c ;
- la figure 3 est une coupe axiale de l'articulation élastique sortant de moulage avant sa finition.

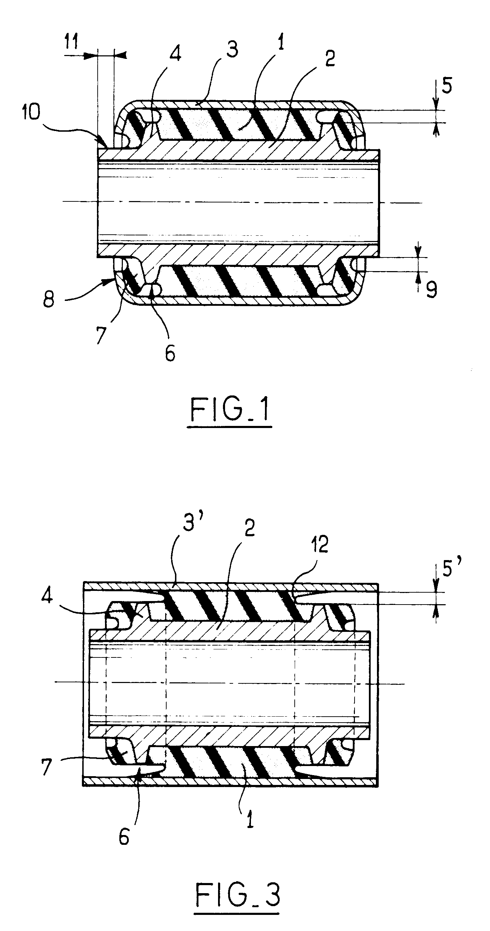

La figure 1 est une coupe axiale de l'articulation élastique, strictement de révolution, faisant l'objet de l'invention. La pièce se compose, de l'extérieur vers l'intérieur, d'une bague extérieure d'emmanchement (3), dont les extrémités sont rabattues pour former des bords rétreints (8), d'une bague élastique (1), en composition élastomérique et d'une douille d'armature interne (2), portant, au voisinage de chacune de ses extrémités, un épaulement à effet axial (4). La bague élastique (1) est réalisée en une composition élastomérique intimement liée, d'une part, à la douille d'armature interne (2) par toute la surface extérieure de celle-ci, d'autre part, à la face interne de la bague extérieure d'emmanchement (3). Le facteur de forme élevé, rapport entre la surface liée à l'un ou l'autre des composants rigides et la surface libre de la composition élastomérique, permet d'exercer des contraintes radiales importantes malgré un volume de la bague élastique (1) supérieur à celui usuellement pratiqué dans l'art antérieur.

La déformabilité de la bague élastique (1) et son module, qui peut être choisi très bas, satisfont la qualité d'un bon filtrage antivibratoire. Un exemple numérique courant, pour une articulation de bras de suspension arrière sur automobile, procure une rigidité radiale de 300 daN par millimètre, sur les premiers millimètres d'excentrage, dans toute direction radiale de l'effort.

Une articulation semblable, n'utilisant que la rigidité axiale par simple cisaillement de la bague élastique (1) selon l'art antérieur, présenterait, par exemple, une rigidité axiale de 30 daN par millimètre ou moins. Le constructeur utilise alors, en général, un épaulement extérieur, souvent lié à la bague extérieure d'emmanchement, pour exercer des efforts pouvant atteindre quelques centaines de daN, avec nécessité de régler la progressivité de butée, alors externe, pour passer d'une rigidité à l'autre, dans un rapport dépassant 10.

Au contraire, dans l'invention, le confinement de la bague élastique (1) est accru grâce à la présence, latéralement sur la douille d'armature interne (2), rigide, métallique ou réalisée en matériau polymérique thermoplastique ou thermodurcissable, et de façon symétrique à proximité des extrémités, d'un épaulement à effet axial (4), dont l'encombrement permet néammoins un certain débattement conique de la bague extérieure d'emmanchement (3). Ceci est permis par le jeu circonférentiel (5) qui entoure ledit épaulement à effet axial (4), revêtu d'une mince couche de gomme (6) qui protège le matériau, le plus souvent métallique, contre la corrosion et assure un rôle anti-bruit en fonctionnement limite risquant de produire des vibrations, lors du contact occasionnel de sa face extérieure avec la surface interne de la bague extérieure d'emmanchement (3).

Chaque épaulement à effet axial (4) est revêtu, vers les extrémités de la douille d'armature interne (2), d'une couche d'épaisseur notable (7), en composition élastomérique de composition le plus généralement identique à celle de la bague élastique (1). La figure représente ladite couche d'épaisseur notable (7) en contact apparent avec le bord rétreint (8) de la bague extérieure d'emmanchement (3). Une des caractéristiques essentielles de l'invention réside dans le choix de ce contact approximativement libre, pour permettre, sans usure, les débattements de rotation relative des surfaces en regard.
Des débattements radiaux doivent également permettre d'exercer les efforts perpendiculaires à l'axe, permanents ou occasionnels, variables, se mesurant en centaines de daN, le mouvement radial correspondant dépassant donc le millimètre. Un débattement conique fait, lui, l'objet d'un excentrage différentiel entre bords rétreints (8) et couches d'épaisseur notable (7), les axes de la douille d'armature interne (2) et de la bague extérieure d'emmanchement (3) n'étant alors plus parallèles.
Pour permettre ces mouvements, un autre jeu circonférentiel (9) sépare nécessairement le diamètre intérieur du bord rétreint (8) de la douille d'armature interne (2) qui vient au voisinage de ce dernier par son palier terminal (10).

Du fait de l'usage de l'articulation élastique, prise en chape entre deux plans, un jeu axial (11) doit être laissé libre, à chaque extrémité de la douille d'armature interne (2), entre le diamètre intérieur du bord rétreint (8) et lesdits plans.
Dans la direction dudit jeu axial (11), la rigidité de débattement axial de la bague élastique (1), au voisinage de la position d'équilibre, c'est à dire en absence de contraintes, se manifeste et s'accompagne d'un décollement de l'appui apparent, à l'une des extrémités, et d'une compression à l'opposé, sur les deux couches d'épaisseur notable (7).

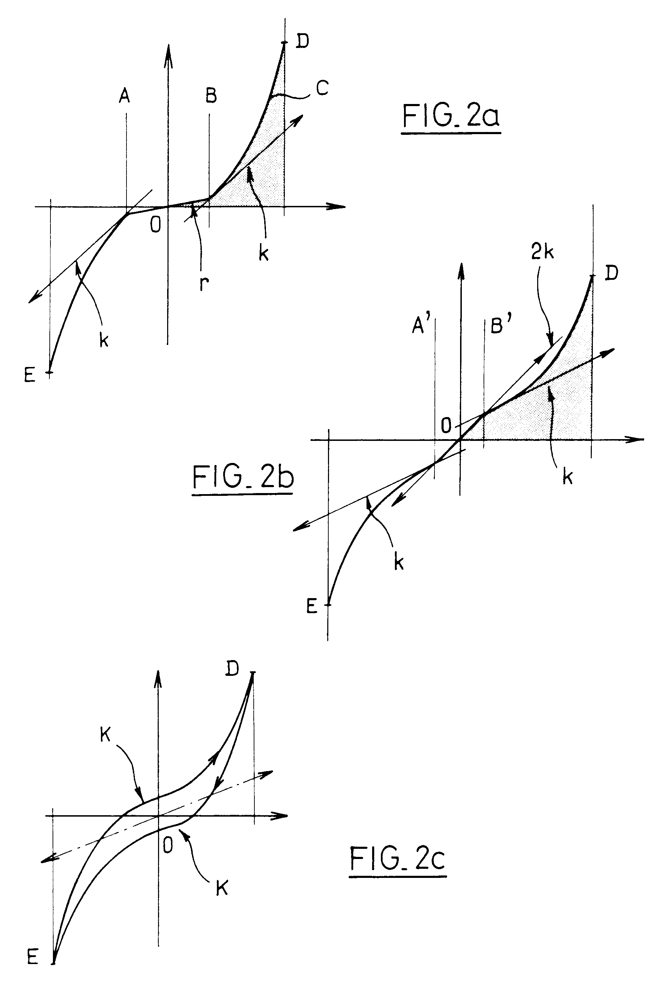

Pour adapter aux besoins des utilisateurs la rigidité fonctionnelle de l'articulation élastique objet de l'invention, il est nécessaire de déterminer la rigidité axiale propre des couches d'épaisseur notable (7). La détermination de cette rigidité axiale se fait par des moyens de mesure dynamique, sur des courses nécessairement réduites, avant que ne s'exercent des réactions importantes de butée, cette caractéristique étant explicitée par la description de la figure 2.

La figure 2 est formée de graphiques permettant de définir, sur un exemple d'application, la rigidité axiale de l'articulation élastique selon l'invention et de déterminer ainsi, par ce type de mesure, les paramètres d'une fabrication industrielle permettant de satisfaire le cahier des charges de l'application. En abscisse, sont représentés les déplacements exprimés en millimètres. En ordonnée, sont portées les forces axiales exercées lors de la mesure de rigidité, pouvant occasionnellement dépasser 300 daN.

La vue 2a montre la construction schématique du graphique où la pente de la courbe (C) représente la rigidité de l'articulation élastique, si l'on admet une rigidité constante (k) à l'écrasement de l'une des couches d'épaisseur notable, au delà des positions représentées par les points (A) et (B) où se fait le contact de celle-ci sur le bord rétreint, à l'une ou l'autre extrémité de l'articulation élastique. La pente du segment (AB) est la rigidité axiale libre (r), très basse, de la bague élastique, par exemple de 30 daN/millimètre. La pente au delà du point (B) montre la rigidité d'écrasement initiale de l'une des couches d'épaisseur notable, rigidité qui s'accroit ensuite progressivement, au delà de la valeur tangente (k), pour atteindre une valeur de butée élevée, juste avant le contact métallique représenté par les points (D) et (E), contact qui met fin au débattement axial de l'articulation élastique.

Il est souhaitable que la pente de la courbe (C) atteigne une valeur élevée telle que (10 k), pour masquer ce choc avant d'atteindre la position représentée par le point (D) du graphique. En tout état de cause, ladite rigidité représentée par la partie terminale de la courbe (C) doit être largement supérieure à la rigidité radiale de l'articulation élastique.

La vue 2b représente la même construction théorique, dans l'hypothèse où les deux contacts de butée ont déjà eu lieu simultanément autour du point d'équilibre symétrique représenté par le point (O) sur le graphique. La rigidité en cette zone centrale est (2k), double de la pente identifiant la rigidité de compression d'une des couches d'épaisseur notable, ceci jusqu'au décollement de l'un des contacts sur l'une des extrémités de l'articulation élastique.
Sur le graphique, au delà des points (A′) et (B′) représentant les positions desdits contacts, la pente redevient (k), rigidité d'un seul écrasement de l'une des couches d'épaisseur notable. En réalité, s'additionne à ces rigidités, la rigidité axiale libre (r), très basse, de la bague élastique. Entre les points (A′) et (B′), la rigidité (2k+r) est donc due à l'existence d'une précontrainte permanente entre deux appuis.

La vue 2c est un graphique de ce que l'observateur peut relever, en mesures dynamiques, sur une pièce d'articulation élastique selon l'invention. Le graphique force - déplacement est dédoublé en deux courbes (C1) et (C2) écartées, en mesures statiques, de la valeur des frictions ou hystéresis et, lors des mesures dynamiques, de l'effet de viscoélasticité, de grandeur analogue.
Les mesures de ces grandeurs dynamiques se heurtent toujours au problème de l'accroissement de la pente minimale (K), décelable sur lesdites courbes de rigidité (C1) et (C2), au voisinage du point d'équilibre symétrique (O), par rigidification dynamique lorsque les amplitudes se réduisent.

Or, l'amélioration du filtrage antivibratoire est l'art d'obtenir une pente minimale (K) détectable, qui soit la plus faible possible, sur une amplitude suffisante, cette amplitude étant celle utilisée pour obtenir une isolation antivibratoire passive, efficace.
Dans l'exemple numérique cité, cette amplitude peut être choisie de plus ou moins 0,25 millimètre autour du point (0). La valeur de (K) est, alors, de 100 daN/millimètre, pour un jeu maximal entre butées, représenté par la course (ED), de l'ordre de 3 millimètres.
Par contre, la fonction assurée par l'articulation élastique portant sur la capacité d'amortir les chocs axiaux, fonction mesurée dans la même direction que la rigidité axiale, vient en contradiction avec ce premier besoin de filtrage ; la capacité d'amortissement est définie par l'énergie absorbée dans une demi oscillation et représentée par l'aire contenue entre la courbe et l'axe horizontal. En se portant au graphique théorique de la figure 2a, suivant le tracé (OBD), la rigidité a pour valeurs successives les pentes (r) puis (k) puis la valeur très croissante jusqu'à (10 k). Pour ce qui concerne la figure 2b, la rigidité suit le tracé (OB′D), de pentes successives de valeur (2k) puis (k) puis de valeur croissant jusqu'à (10k). Sur le tracé réel représenté en vue 2c, le fonctionnement effectif de la pièce ne permet pas d'identifier s'il existe physiquement un palier (AB) correspondant à un véritable jeu, à rigidité axiale libre (r), ou une précontrainte, de course (A′B′), car au delà, la rigidité apparente diminue temporairement de (2k) à la valeur tangente (k), correspondant à l'écrasement d'une seule des couches d'épaisseur notable, contrainte par le bord rétreint, avant de croître à nouveau jusqu'au contact métallique représenté par le point (D).

La courbe de rigidité repasse donc, en deux points, par la valeur (2k) et la courbe moyenne représente une rigidité apparente intermédiaire, de valeur (K), comprise entre (k) et (2k).

A la lecture de la vue 2a, la courbe moyenne représente une rigidité apparente intermédiaire (K), de valeur comprise entre (r) et (k), donc nettement inférieure à (k).

Il est vraisemblable, pour peu que le contact de la surface d'élastomère de la couche d'épaisseur notable avec la surface métallique interne du bord rétreint assure une certaine progressivité aux contacts théoriques représentés par les points (A) et (B) (avec jeu) ou (A′) et (B′) (avec précontrainte), que les phénomènes de jeu et de précontrainte se produisent simultanément, raison pour laquelle le terme de "jeu contrôlé" a été choisi, comme caractéristique de l'invention.

Dans la zone utilisée fonctionnellement pour le filtrage antivibratoire des débattements axiaux, la rigidité représentée par la pente minimale détectable (K) d'un graphique conforme à la vue 2c est fournie pratiquement aussi bien au point (B) qu'au point (B′) par la valeur tangente représentant la rigidité (k).

Ladite rigidité (k) est nettement différente de la rigidité axiale libre (r), due au cisaillement pur de la bague élastique, dont la valeur est, dans l'exemple cité, 30 daN/millimètre, et elle est, par définition, conséquence des déformations de l'une ou l'autre des couches d'épaisseur notable ; elle est donc, en fait, égale à la valeur (K).

La rigidité apparente détectable (K), particulièrement efficace pour le filtrage doit être comprise entre deux valeurs, respectivement deux fois et cinq fois plus faibles que la rigidité radiale. Elle peut être fixée, dans l'exemple numérique cité, entre 60 et 150 daN/millimètre et préférentiellement à la valeur de 100 daN/millimètre, demandant donc de donner à la couche d'épaisseur notable une épaisseur de plusieurs millimètres.

Pour la détermination de ladite épaisseur, l'expérience industrielle, basée sur l'énergie susceptible d'être absorbée dans des chocs par les élastomères, permet d'attendre des performances énergétiques restituables sans destruction de la composition élastomérique si ladite énergie ne dépasse pas sensiblement 300 Joules par kilogramme d'élastomère. Une course libre, avant la limitation brutale du jeu par le contact rigide, de plus ou moins 1,5 millimètres, pour des réactions ne dépassant pas 750 daN, conduit à ce que l'énergie représentée par l'aire comprise entre la portion de courbe (OBD) ou (OB′D) et l'axe des abscisses avoisine 1,2 Joules par moitié de cycle.

Ceci conduit à concevoir l'articulation élastique de manière à ce qu'une masse de l'ordre de 4 grammes de la couche d'épaisseur notable soit concernée par la compression ; pour l'exemple cité, sur un diamètre moyen de 25 millimètres, une épaisseur de ladite couche d'épaisseur notable de l'ordre de 4 à 5 millimètres est nécessaire pour assurer aussi bien un bon filtrage qu'une absorption correcte des chocs exceptionnels, grâce à l'optimisation de la fonction butée.

La figure 3 est une coupe axiale de l'articulation élastique ainsi définie, représentée brute de fabrication avant sa finition par rétreint. Au cours de la description de cette figure, sera détaillée la méthode de réalisation préférentielle.

La bague extérieure cylindrique (3') est obtenue par découpe à longueur d'un tube à paroi mince, en acier étiré sans soudure par exemple. Un jeu circonférentiel (5′), ménagé autour de l'épaulement à effet axial (4) de la douille d'armature interne (2), doit prendre une valeur suffisante pour assurer la possibilité de rétreint ultérieur de ladite bague extérieure cylindrique (3').

Le fond de gorge (12), limitant la zone laissée libre par le jeu circonférentiel (5′), doit permettre le refoulement, sous l'effet de ce rétreint diamétral, de la matière élastomérique de compressibilité volumétrique quasiment nulle.

En effet, un rétreint pouvant atteindre 10 % de l'épaisseur sur la bague élastique (1), du fait de son épaisseur nettement plus élevée que celle des articulations élastiques selon l'art antérieur, atteint 1,4 millimètres, par exemple, au diamètre.

La composition élastomérique est alors refoulée sur les deux faces d'un anneau, section partielle de la bague élastique (1). Ledit anneau présente une surface libre qui n'est qu'une fraction de la section droite présentée par la bague élastique (1), car elle est bloquée par chaque épaulement à effet axial (4).

Le volume de composition élastomérique ainsi refoulé par l'opération de rétreint peut dépasser trois centimètres cube pour les deux faces. Il s'en déduit que le fond de gorge (12) doit être en retrait de 3 à 4 millimètres par rapport à l'épaulement à effet axial (4), pour éviter un risque de pincement du matériau élastique, entre ce dernier et la bague extérieure d'emmanchement (5′).

C'est le facteur de forme élevé que procure à la bague élastique (1) l'existence de cette surface libre restreinte , qui permet d'appliquer un filtrage très efficace, grâce à sa rigidité radiale modérée en excentrage, tout en acceptant des efforts radiaux importants. Par ailleurs, la bague élastique (1), seule, ne pourrait supporter des efforts axiaux notables, c'est la grande surface et l'épaisseur de la couche d'épaisseur notable revêtant l'épaulement à effet axial (4) qui assurent un filtrage efficace par la valeur de la rigidité (K) aussi bien que la tenue aux efforts axiaux occasionnels exercés.

En même temps, l'épaisseur de la bague élastique (1), elle-même, permet des performances en rotation sans torsion qui atteignent, sans artifice, celles des bagues à glissement incorporé.

Pour assurer la fonction butée avec le jeu contrôlé caractéristique de l'invention, les extrêmités de la bague extérieure cylindrique (3') déjà radialement rétreinte par une machine appropriée, sont alors prises dans un outil adapté qui façonne la forme légèrement conique nécessaire du bord rétreint (8), tout en ménageant, par intervention d'une partie cylindrique de l'outil confinant vers l'intérieur la déformation, l'autre jeu circonférentiel (9) (vu en figure 1) autour du palier terminal (10). Le réglage des contacts superficiels, entre les couches d'épaisseur notable (7) et la surface interne dudit bord rétreint (8), avec le respect du jeu axial (11) est assuré pour satisfaire la rigidité voulue (K).

Un procédé de fabrication d'une articulation élastique à haut pouvoir de filtrage et jeu contrôlé par butées incorporées, selon l'invention, ne diffère pas de façon majeure de celui des articulations à tourillonnement selon l'art antérieur.

Les faces en regard de la bague extérieure cylindrique (3') et de la douille d'armature interne (2) sont enduites des colles nécessaires, selon les techniques connues, pour la liaison intime avec la matière de la bague élastique (1), au cours du moulage, par injection ou par transfert, dans des moules fermés.

La réalisation de ladite bague élastique (1) est donc simultanée à celle des couches d'épaisseur notable (7) sur les épaulements à effet axial (4), que les compositions élastomériques soient identiques ou différents.

Le rétreint diamétral de la bague extérieure cylindrique (3') est la phase suivante, produisant le diamètre définitif qui servira à l'emmanchement ultérieur pour le montage de la pièce.

La mise en forme des extrémités représente une troisième phase.

La dernière phase est la protection contre la corrosion des faces qui ont été déformées, couramment réalisée, par traitement chimique, à température compatible avec la composition élastomérique utilisée.

L'articulation élastique à haut pouvoir de filtrage et jeu contrôlé par butées incorporées est alors prête à équiper l'axe de rotation d'un bras de suspension ; par exemple, celui des points d'articulation de bras triangulé(s), dans une suspension de véhicule ou celui des moyens de fixation à usage antichoc et antivibratoire de matériel sensible, soit embarqué dans un véhicule ou sur un navire, soit placé au voisinage d'une source de vibrations, par exemple dans un atelier.

Ainsi la pièce terminée est montée par simple emmanchement dans un alésage - qui définit le positionnement au point d'équilibre symétrique (O) - la variation de rigidité caractéristique de l'invention étant liée à la pièce et non dépendante de réglages ultérieurs de butées extérieures alors devenues inutiles.

Les avantages de l'utilisation d'articulations élastiques à haut pouvoir de filtrage et jeu contrôlé par butées incorporées selon l'invention sont donc :
- un bien meilleur filtrage antivibratoire, sans la nécessité de régler un jeu fonctionnel par des butées indépendantes ;
- une bonne rigidité radiale et des débattements angulaires performants, par l'usage d'une bague élastique épaisse, sans avoir à intégrer de surfaces de frottement ;
- des déformations coniques modérées, mais sous bon filtrage, sans raideur conique exagérée ;
- une grande facilité de réglage en fabrication et adaptabilité, par optimisation entre raideur de filtrage et résistance aux efforts axiaux, sans modification externe de la géométrie de la pièce ;
- l'absence de zone instable et de butées externes, améliorant de ce fait le confort de conduite et la tenue de route, dans les applications en suspension de véhicule.

## Revendications

1. Articulation élastique à pouvoir de filtrage élevé et jeu contrôlé par butées incorporées, faisant appel à la liaison élastique d'une composition élastomérique intimement liée à deux éléments rigides coaxiaux pour assurer la rotation sans friction d'un bras de suspension autour d'un axe fixe, caractérisée :
- en ce qu'une couche d'épaisseur notable (7), en composition élastomérique, revêtant les épaulements à effet axial (4) de chaque extrémité d'une douille d'armature interne (2), vient buter axialement, dans chaque sens, sur le bord rétreint (8) d'une bague extérieure d'emmanchement (3) qui tourillonne, par déformation d'une bague élastique (1), sur ladite douille d'armature interne (2),
- en ce que la fonction de butée, dans chaque sens axial, est optimisée de façon à disposer, lors de débattements dynamiques sans contraintes axiales permanentes, d'une rigidité de filtrage de deux à cinq fois plus basse que la rigidité s'opposant aux efforts radiaux,
- et en ce que la rigidité axiale devient progressivement, au delà de la zone de filtrage, supérieure à la valeur de ladite rigidité s'opposant aux efforts radiaux.

2. Suspension de véhicule utilisant un (ou des) bras triangulé(s) articulé(s) autour d'un axe fixe par rapport au chassis, caractérisée en ce que au moins l'un des points d'articulation est équipé d'une articulation élastique à haut pouvoir de filtrage et jeu axial contrôlé par butées incorporées conforme à la revendication 1.

3. Fixation à usage de suspension antivibratoire sur matériel embarqué dans un véhicule ou sur un navire, caractérisée en ce qu'elle est équipée d'au moins une articulation élastique à haut pouvoir de filtrage et jeu axial contrôlé par butées incorporées réalisée conformément à la revendication 1.

## Claims

1. Elastic joint of high filtering capability and play controlled by incorporated stops, calling upon the elastic bonding of an elastomeric compound closely connected to two coaxial rigid members to ensure rotation without friction of a suspension arm about a fixed axis, characterised:
- in that a layer of considerable thickness (7) of elastomeric compound, coating the axially working shoulders (4) of each end of a casing with internal reinforcement (2), axially abuts, in each direction, the narrow edge (8) of an outer fitting ring (3) which pivots, by deforming an elastic ring (1) on the said casing with internal reinforcement (2).
- in that the stop function, in each axial direction is made best in such way, at the time of dynamic straining without permanent axial restraints, as to set a filtering rigidity two to five times lower than the rigidity opposing the radial stresses.
- in that the axial rigidity becomes progressively greater than the value of the said rigidity opposing the radial stresses, beyond the filtering area.

2. Vehicle suspension using one triangulated arm (or arms) articulated about an axis fixed in relation to the chassis, characterised in that at least one of the link points is fitted with an elastic joint of high filtering capability and axial play controlled by incorporated stops in accordance with claim 1.

3. Fixing for use as antivibratory suspension on stores taken on board a vehicle or ship, characterised in that it is fitted with at least one elastic joint of high filtering capability and axial play controlled by incorporated stops in accordance with claim 1.

## Patentansprüche

1. Elastisches Gelenk mit erhöhter Filterfähigkeit und Spielsteuerung durch eingebaute Widerlager, wobei zur Gewährleistung der reibungsfreien Drehung eines Aufhängungslenkers um eine feste Achse zwei starre, zueinander koaxial angeordnete Teile über eine mit ihnen innig verbundene Elastomerzusammensetzung elastisch verbunden sind, dadurch gekennzeichnet,
daß eine aus einer Elastomerzusammensetzung bestehende, Axialflansche (4) an jedem Ende einer als innerer Beschlag dienenden Innenhülse (2) übergreifende Schicht (7) erheblicher Dicke sich axial beidseitig an einem eingezogenen Rand (8) eines als äußerer Beschlag dienenden Preßrings (3) abstützt, der sich unter Verformung einer elastischen Buchse (1) auf der Innenhülse (2) dreht,
daß die Wirkung der beidseitigen axialen Widerlager so optimiert ist, daß beim dynamischen Durchfedern ohne permanente Axialbelastungen die Filtersteifheit zwei bis fünfmal geringer ist als die radialen Beanspruchungen entgegenwirkende Steifheit, und
daß die axiale Steifheit jenseits des Filterbereichs progressiv auf einen Wert ansteigt, der größer ist als die radialen Beanspruchungen entgegenwirkende Steifheit.

2. Fahrzeugaufhängung mit einem oder mehreren Dreieckslenkern, die um eine feste Achse relativ zum Fahrgestell schwenkbar sind, dadurch gekennzeichnet, daß zumindest einer der Anlenkspunkte ein elastisches Gelenk mit erhöhter Filterfähigkeit und Axialspielsteuerung durch eingebaute Widerlager nach Anspruch 1 ist.

3. Befestigung zur Verwendung als Antivibrationsaufhängung einer Ladung in einem Fahrzeug oder auf einem Schiff, dadurch gekennzeichnet, daß sie zumindest ein elastisches Gelenk mit erhöhter Filterfähigkeit und Axialspielsteuerung durch eingebaute Widerlager nach Anspruch 1 aufweist.
